# FASCICULE DE BREVET EUROPEEN

(11) **EP 1 450 940 B1**
(45) Date de publication et mention de la délivrance du brevet: **27.04.2005**
(21) Numéro de dépôt: 02799769.1
(22) Date de dépôt: 03.12.2002
(51) Int. Cl.: B01J 8/22, B01J 8/00, B01J 19/18, C01B 15/023

(54) **PROCEDE ET DISPOSITIF DE REACTION CHIMIQUE ENTRE UN GAZ ET AU MOINS UN COMPOSE EN SOLUTION, MIS EN OEUVRE EN PRESENCE D'UN CATALYSEUR SOLIDE**
VERFAHREN UND VORRICHTUNG FÜR EINE IN ANWESENHEIT EINES FESTSTOFFKATALYSATORS DURCHGEFÜHRTE CHEMISCHE REAKTION ZWISCHEN EINEM GAS UND MINDESTENS EINER GELÖSTEN KOMPONENTE
METHOD AND DEVICE FOR CHEMICAL REACTION BETWEEN A GAS AND AT LEAST A COMPOUND IN SOLUTION, CARRIED OUT IN THE PRESENCE OF A SOLID CATALYST

(30) Priorité: 04.12.2001 FR 0115660
(43) Date de publication de la demande: 01.09.2004
(73) Titulaire: TECHNIP FRANCE, 92400 Courbevoie (FR)
(72) Inventeur: DIETRICH, Marc, F-78610 Auffargis (FR); HERNANDEZ, José, Luis, 22600 Sabinanigo (ES)
(74) Mandataire: Blot, Philippe Robert Emile
(86) Numéro de dépôt international: PCT/FR2002/004159
(87) Numéro de publication internationale: WO 2003/047741

(56) Documents cités:
- WO-A-01/68519
- US-A- 3 423 176

## Description

La présente invention a pour objet :
- un procédé de réaction chimique entre un gaz et au moins un composé en solution, mis en oeuvre en continu, dans un réacteur agité, en présence d'un catalyseur solide maintenu, dispersé, en suspension au sein de la solution renfermant ledit composé ; ledit procédé incluant la séparation dudit catalyseur de ladite solution ayant réagi ;
- un dispositif convenant à la mise en oeuvre dudit procédé.

La présente invention a été plus particulièrement développée, dans le contexte de la production de peroxyde d'hydrogène (H₂O₂) par le procédé à l'anthraquinone, au niveau de l'hydrogénation catalytique de la solution de travail (ou "working solution"). Son champ d'application n'est toutefois nullement limité audit contexte. L'homme du métier comprendra aisément, à la lecture de ce qui suit, que l'invention a pour champ d'application tout contexte de réaction gaz/liquide (G/L), le liquide (L) renfermant en solution au moins un composé chimique susceptible de réagir avec le gaz (G), en présence d'un catalyseur solide, maintenu en suspension dans ledit liquide (L).

Selon l'art antérieur, il a été décrit la mise en oeuvre de procédés de réaction gaz/liquide (G/L) en présence de catalyseur solide ; ledit catalyseur solide étant immobilisé (on parle de catalyseur en lit fixe) ou dispersé, en suspension au sein dudit liquide. Dans ce deuxième cas de figure, il se pose le problème de la séparation dudit catalyseur dudit liquide ayant réagi. Une telle séparation peut être mise en oeuvre à l'aide d'hydrocyclones. Ceci est notamment illustré dans la demande WO 98/282 25. Une telle séparation peut également être basée sur des opérations de filtration.

Le contexte de l'invention est plus précisément celui de réactions gaz/liquide (G/L), le liquide (L) renfermant en solution au moins un composé chimique, susceptible de réagir avec le gaz (G), en présence d'un catalyseur solide, maintenu en suspension dans ledit liquide (L), mis en oeuvre avec séparation (récupération) dudit catalyseur solide par filtration.

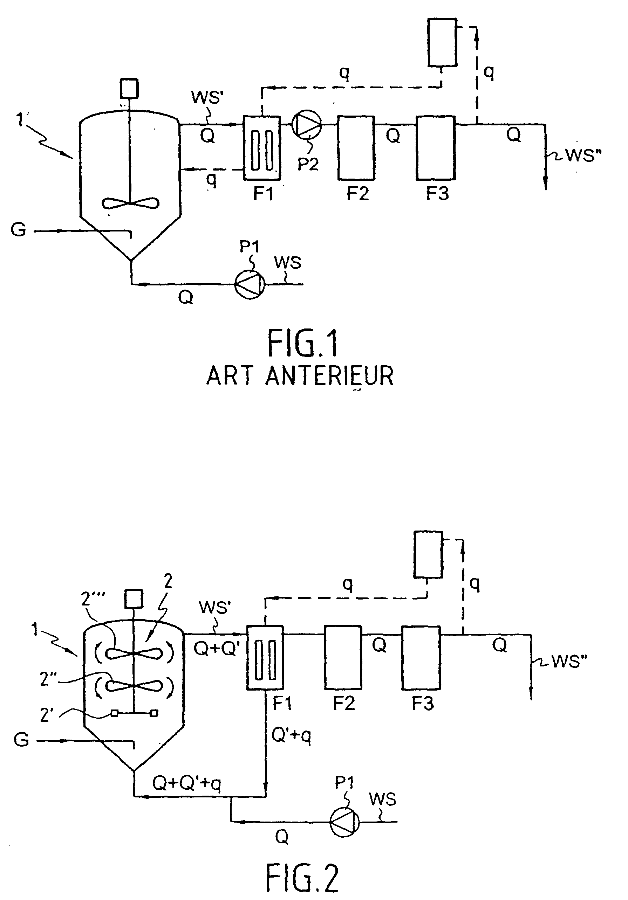

Pour faciliter, d'une part, l'exposé ci-après de la présente invention, sous ses aspects de procédé et de dispositif, et, d'autre part, la compréhension de ladite invention, on se propose de préciser, dès maintenant, en référence à la figure 1 annexée, l'art antérieur le plus proche de l'invention, tel qu'exposé ci-dessus en termes généraux. Il est proposé, selon l'invention, un perfectionnement à cet art antérieur.

Selon ledit art antérieur, une solution WS (renfermant au moins un composé susceptible de réagir avec le gaz G intervenant) est traitée, en continu, dans le réacteur 1, par un gaz G, en présence d'un catalyseur solide. Ladite solution WS est mise en circulation, au débit Q, par les pompes P1 et P2.

Le traitement en cause peut tout à fait consister en l'hydrogénation (G = H₂) de la "working solution" (au moins un dérivé de l'anthraquinone dissous dans un mélange complexe de solvants organiques) intervenant pour la production de peroxyde d'hydrogène (H₂O₂) dans un procédé cyclique à l'anthraquinone ; ladite hydrogénation étant mise en oeuvre en présence d'un catalyseur à base de palladium, immobilisé sur des grains d'alumine ou d'alumino-silicate.

La solution WS est traitée, de manière efficace, dans le réacteur agité 1 au sein duquel catalyseur solide et gaz réactif (G) sont dispersés et maintenus en suspension.

A la sortie du réacteur 1, le catalyseur est séparé de la solution traitée WS', à l'aide d'une série de filtres, comportant successivement :
- au moins un filtre primaire F1, généralement de type à bougie en carbone ou métal fritté (filtre grossier, d'une porosité adaptée à celle des grains de catalyseur à bloquer, par exemple d'une porosité voisine de 5µm). Sur la variante avantageuse représentée, il intervient deux tels filtres primaires F1, montés en parallèle ;
- au moins un filtre secondaire, généralement du type filtre à cartouches, d'une porosité plus fine (par exemple, voisine de 0,5µm), destiné à arrêter les particules plus fines qui ont inexorablement, du fait de la forte agitation nécessaire dans le réacteur, été générées par abrasion des grains de catalyseur. Sur la variante avantageuse représentée, il intervient deux tels filtres secondaires, F2 et F3, montés en série.

Le débit total Q de la solution entrant pour être traité dans le réacteur 1 est envoyé vers et traverse lesdits filtres F1, F2 et F3. Ledit débit Q traverse effectivement l'unique filtre F1 en service (unique filtre F1 intervenant ou unique filtre F1 en service d'une batterie d'au moins deux filtres montés en parallèle) ou se partage entre au moins deux filtres F1 en service d'une telle batterie de filtres. Dans ce dernier cas de figure, on considère que ledit débit Q traverse lesdits filtres en service, considérés dans leur ensemble.

Les filtres primaires F1 sont séquentiellement lavés à contre-courant, pour éviter le bouchage de leurs pores et ramener les grains de catalyseur bloqués dans le réacteur 1. Ce lavage séquentiel fait intervenir un débit q, prélevé, selon la variante représentée, sur le débit Q de solution traitée et filtrée WS".

En sus dudit lavage séquentiel, lesdits filtres primaires F1 doivent régulièrement (1 fois toutes les trois semaines dans le contexte de la production de H₂O₂) subir un lavage chimique (acide et/ou basique) pour rester propres.

Lesdits filtres primaires F1 sont fortement sollicités dans la mesure où, globalement, l'intégralité du débit Q de solution traitée WS' les traversent et où les lavages chimiques sont des traitements relativement agressifs. Ils doivent être changés fréquemment.

Il en est de même pour les filtres secondaires F2 et F3. En effet, dans la mesure où l'efficacité du réacteur est liée à la force de l'agitation au sein de celui-ci, l'abrasion des grains de catalyseur intervenant est relativement conséquente.

L'exploitation de ce procédé de l'art antérieur soulève des problèmes techniques, notamment les quatre indiqués ci-après :
- le catalyseur solide intervenant, entraîné par le débit Q, a tendance à s'accumuler sur les filtres primaires. Ledit catalyseur ainsi accumulé n'est plus actif dans le réacteur et est responsable d'une perte de charge préjudiciable au maintien dudit débit Q ;
- le nettoyage chimique et le remplacement des bougies des filtres primaires sont des opérations coûteuses ;
- le remplacement des cartouches des filtres secondaires est également une opération coûteuse ;
- compte-tenu du rapport des débits q et Q, chaque lavage à contre-courant dérègle le fonctionnement du réacteur, par retour au sein dudit réacteur de solution WS" et de catalyseur.

L'invention a été développée, dans le contexte précisé ci-dessus en référence à ladite figure 1, pour obvier auxdits problèmes techniques.

Selon son premier objet, ladite invention concerne donc un procédé de réaction chimique entre un gaz et au moins un composé en solution, mis en oeuvre en continu, dans un réacteur agité, en présence d'un catalyseur solide maintenu, dispersé, en suspension au sein de la solution renfermant ledit composé.

De façon classique, ledit procédé comprend :
- l'alimentation dudit réacteur, en sa partie basse, en ladite solution à faire réagir et en ledit gaz ;
- la mise en contact, au sein dudit réacteur, de ladite solution, dudit gaz et dudit catalyseur, aux fins de la mise en oeuvre de ladite réaction chimique ;
- la récupération, en partie haute dudit réacteur, de la solution ayant réagi ;
- la filtration de celle-ci par passage au travers successivement d'au moins un filtre primaire et d'au moins un filtre secondaire ;
- la récupération de la solution ayant réagi, ainsi débarrassée dudit catalyseur ;
- le contre-lavage séquentiel dudit(desdits) filtre(s) primaire(s) avec un débit pulsé prélevé sur ladite solution ayant réagi filtrée et/ou sur la solution d'alimentation à faire réagir ; ledit contre-lavage visant à renvoyer le catalyseur retenu sur le(s)dit(s) filtre(s) primaire(s) dans ledit réacteur.

Ces étapes successives du procédé de l'invention sont communes au procédé de l'art antérieur, tel que schématisé sur la figure 1.

De façon caractéristique, ledit procédé de l'invention comprend en outre un recyclage d'une fraction de la solution ayant réagi vers la partie basse dudit réacteur, à un débit supérieur à celui d'alimentation dudit réacteur en la solution à faire réagir ; ledit recyclage étant assuré par la mise en oeuvre, au sein dudit réacteur, d'une agitation adéquate et ladite fraction de la solution ayant réagi étant détournée, pour ledit recyclage, au niveau du(des)dit(s) filtre(s) primaire(s) et assurant ainsi un léchage tangentiel du(des)dit(s) filtre(s) primaire(s).

De façon caractéristique, dans le cadre du procédé de l'invention, un léchage tangentiel du(des) filtre(s) primaire(s) est assuré avec un débit conséquent de solution ayant réagi, recyclé en partie basse du réacteur ; l'agitation au sein dudit réacteur assurant à elle seule ledit recyclage au débit conséquent.

De façon nullement limitative, on précise ici que ce débit de recyclage de la solution ayant réagi est généralement de 3 à 10 fois supérieur au débit d'alimentation du réacteur en la solution à faire réagir. Il est avantageusement de 5 à 10 fois supérieur audit débit d'alimentation.

Le point clé de la mise en oeuvre du procédé de l'invention est l'agitation au sein du réacteur. Ladite agitation est de façon classique responsable de l'intensité des contacts gaz/liquide/catalyseur. Elle doit par ailleurs, de façon plus originale, assurer l'effet de pompage escompté (le recyclage d'une partie de la solution ayant réagi).

Dans le cadre d'une mise en oeuvre optimisée du procédé de l'invention, ladite agitation doit, à la fois, assurer :
- la dispersion du gaz et du catalyseur au sein de la solution (dispersion optimisée pour une optimisation des contacts mentionnés ci-dessus) ;
- l'effet de pompage escompté (pour le recyclage) ; et
- une recirculation interne (au sein du réacteur) de la solution. En effet, il est vivement opportun que le temps de séjour de ladite solution au sein dudit réacteur soit suffisant pour un bon déroulement de la réaction gaz/liquide.

L'homme du métier, à la considération de ce qui précède, a déjà saisi tout l'intérêt du procédé de l'invention. Sa mise en oeuvre présente de nombreux avantages. Notamment :
a) le débit d'alimentation du réacteur étant considérablement augmenté - il est maintenant la somme du débit d'alimentation en la solution à faire réagir et du débit de solution recyclée (généralement de 3 à 10 fois supérieur audit débit d'alimentation) - le contre-lavage séquentiel du(des) filtre(s) primaire(s) a son effet perturbateur considérablement diminué, voire annulé ;
b) la filtration mise en oeuvre au niveau du(des)dit(s) filtre(s) primaire(s) est mixte. Le(s) filtre(s) est (sont) traversé(s) par un débit de solution traitée correspondant au débit d'alimentation du réacteur et léché(s) par un débit de solution traitée plus conséquent. Ce léchage minimise toute accumulation de grains et de fines de catalyseur, nettoie en continu le(s)dit(s) filtre(s), recycle vers le réacteur lesdits grains et fines. Ainsi, la concentration en catalyseur au sein du réacteur est optimisée ; la durée de vie des filtres primaire(s) et secondaire(s) est considérablement augmentée (la fréquence des lavages chimiques des bougies des filtres primaires est fortement diminuée ainsi que celle des changements des cartouches de filtres secondaires. Dans le contexte de l'hydrogénation de la solution de travail d'un procédé cyclique à l'anthraquinone de production de H₂O₂, un changement annuel et un lavage chimique annuel se sont révélés suffisants) ; le problème de la perte de charge évoqué ci-dessus (par passage de la solution traitée au travers du catalyseur accumulé) n'existe plus ;
c) compte tenu du recyclage d'une fraction de la solution ayant réagi, la réaction mise en oeuvre au sein du réacteur peut être plus facilement contrôlée ; notamment vis-à-vis de la formation de sous-produits ;
d) il est possible d'optimiser l'agitation au sein du réacteur pour assurer une très bonne répartition des divers composants liquide, solide, gazeux, tout en limitant l'abrasion du catalyseur ;
e) en référence aux points b) à d) ci-dessus, la consommation en catalyseur est diminuée (par rapport à ce qu'elle est dans un procédé du type de celui schématisé sur la figure 1).

Le procédé de l'invention convient tout particulièrement pour la mise en oeuvre d'hydrogénations. Dans de tels contextes, le gaz intervenant consiste en de l'hydrogène ou, en tout état de cause, renferme de l'hydrogène ; la solution intervenant renferme, elle, au moins un composé susceptible de réagir avec ledit hydrogène.

Le procédé de l'invention convient tout particulièrement pour l'hydrogénation d'au moins un dérivé de l'anthraquinone, en solution dans la solution de travail, dans le cadre de la préparation de peroxyde d'hydrogène (H₂O₂). Ce cadre est notamment précisé dans les demandes WO98/28225 et EP016 622. Dans ledit cadre, en mettant en oeuvre le procédé de l'invention, la demanderesse a obtenu des résultats très intéressants. En fonction de la composition de la solution de travail, elle a obtenu des degrés d'hydrogénation aussi élevés que 10 à 15g/l (g de H₂O₂/litre de solution de travail), en limitant la formation de sous-produits.

On en vient maintenant à la description, en termes généraux, du second objet de la présente invention, à savoir un dispositif convenant à la mise en oeuvre du procédé décrit ci-dessus (premier objet de ladite invention).

Ledit dispositif comprend, de façon classique :
- un réacteur équipé de moyens d'agitation, de moyens d'alimentation en solution, de moyens d'alimentation en gaz et de moyens pour délivrer la solution ayant réagi ; lesdits moyens d'alimentation en solution et en gaz étant agencés en partie basse dudit réacteur tandis que lesdits moyens pour délivrer la solution ayant réagi le sont en partie haute;
- un ensemble de filtration monté, en sortie dudit réacteur, sur lesdits moyens pour délivrer la solution ayant réagi et comportant au moins un filtre primaire (généralement, une batterie d'au moins deux filtres primaires, montés en parallèle, de sorte que l'on puisse passer d'un filtre à un autre filtre sans arrêter le procédé) et au moins un filtre secondaire (généralement, plusieurs filtres secondaires, montés en série) ;
- des moyens pour mettre en oeuvre un contre-lavage séquentiel dudit(desdits) filtre(s) primaire(s) avec un débit pulsé prélevé en aval dudit ensemble de filtration sur la solution ayant réagi filtrée et/ou en amont dudit réacteur sur la solution à faire réagir.

En cela, le dispositif de l'invention est du type de celui de l'art antérieur, tel que schématisé sur la figure 1.

De façon caractéristique, ledit dispositif de l'invention comprend en outre des moyens pour recycler, avec léchage tangentiel du(des) filtre(s) primaire(s), un débit de solution ayant réagi vers le bas dudit réacteur et les moyens d'agitation dudit réacteur assurent, à eux seuls, ledit recyclage.

Lesdits moyens consistent en un circuit adéquat qui permet d'assurer, successivement :
- le détournement, d'une fraction de la solution ayant réagi, en sortie haute du réacteur ;
- le léchage tangentiel du(des) filtre(s) primaire(s) en service par ladite fraction détournée ;
- le recyclage en partie basse du réacteur de ladite fraction détournée.

Cette fraction peut être réintroduite dans ledit réacteur, indépendamment ou non, de l'alimentation dudit réacteur en la solution à faire réagir. Selon une variante avantageuse, il est prévu une unique alimentation, en partie basse du réacteur, en un mélange de ladite fraction recyclée et de ladite solution à faire réagir ; ledit mélange ayant été constitué en amont.

Les moyens d'agitation du réacteur, aptes à assurer ladite agitation et le recyclage de la fraction détournée, sont également avantageusement aptes à assurer une recirculation interne. Ils consistent avantageusement en un agitateur à plusieurs étages (généralement à au moins trois étages).

Dans le cadre d'une variante de réalisation optimisée, lesdits moyens d'agitation comprennent :
- un mobile de dispersion, actif en partie basse du réacteur ;
- un étage intermédiaire, apte à assurer une recirculation interne dans le réacteur et à contribuer au pompage de la solution ayant réagi vers le(s) filtre(s) primaire(s) ;
- un étage supérieur, apte à assurer le pompage de ladite solution ayant réagi vers le(s)dit(s) filtre(s) primaire(s).

Ledit mobile de dispersion assure une bonne dispersion du catalyseur et du gaz au sein de la solution, renfermant le(s) réactif(s) en solution.

Ledit étage intermédiaire (autre mobile) assure un peu de pompage mais surtout une recirculation interne du mélange réactionnel dans le réacteur (il permet d'augmenter le temps de séjour dudit mélange dans ledit réacteur).

Ledit étage supérieur (autre mobile) assure le pompage de la solution ayant réagi vers le(s) filtre(s) primaire(s). Le débit assuré doit être important afin de recycler en permanence le catalyseur vers le fond du réacteur.

Selon une variante de réalisation, aux fins précisées ci-dessus, lesdits étages intermédiaire et supérieur comportent des pales inclinées respectivement vers le bas et vers le haut.

Le dispositif de l'invention tel que décrit ci-dessus est avantageusement agencé dans une boucle de production de peroxyde d'hydrogène, par le procédé cyclique à l'anthraquinone, au niveau du réacteur d'hydrogénation de la solution de travail.

On se propose maintenant de reconsidérer l'invention, sous deux aspects de procédé et de dispositif, en référence aux figures annexées.

La Figure 1 illustre l'art antérieur le plus proche de ladite invention. Elle a été commentée dans la partie introductive du présent texte.

La Figure 2 illustre une variante préférée de mise en oeuvre de ladite invention. Elle est à considérer en parallèle avec ladite Figure 1.

La solution à faire réagir, WS, est amenée à un débit Q, grâce à la pompe P1. Elle est introduite dans le bas du réacteur après avoir été mélangée à une fraction de la solution ayant réagi WS', fraction recyclée à un débit Q'. On a vu qu'on a avantageusement Q' ≥ 3 Q. Le mélange contient en outre séquentiellement le débit q de solution traitée et filtrée WS". Ce débit q a servi à laver séquentiellement le(s) filtre(s) primaire(s) F1.

Ledit mélange est mis à réagir en partie basse du réacteur 1 avec le gaz G.

Les moyens d'agitation 2 dudit réacteur 1 sont du type optimum précisé ci-dessus. Ils comportent un étage inférieur ou mobile de dispersion 2', un étage intermédiaire 2" qui assure principalement une recirculation de la solution dans le réacteur 1 et un étage supérieur 2"' qui lui assure principalement le pompage de la solution ayant réagi WS'.

On peut schématiquement considérer que la pompe P1 assure la circulation du débit Q de solution WS tandis que l'étage supérieur 2"' des moyens d'agitation 2 assure, lui principalement, la circulation en boucle du débit Q' de solution WS'. Il n'est plus besoin d'une seconde pompe P2, selon la figure 1.

Au niveau des filtres primaires F1, il est mis en oeuvre une filtration mixte. Le débit Q de la solution WS' traverse lesdits filtres F1 tandis que le débit Q' de ladite solution WS' lèche tangentiellement lesdits filtres F1. Ledit débit Q de solution WS' traverse ensuite successivement les filtres secondaires F2 et F3. Sur la solution ayant réagi filtrée, il est prélevé le débit q pour la mise en oeuvre du lavage séquentiel, à contre-courant des filtres F1. Selon une autre variante, ledit débit q aurait pu être prélevé sur le débit Q d'alimentation en la solution WS à faire réagir (en amont de son mélange avec la solution recyclée).

La quantité de catalyseur entraîné au-delà des filtres primaires F1 est minimisée.

On se propose enfin d'illustrer l'invention par l'exemple ci-après.

Ladite invention a été mise en oeuvre, comme illustré sur la Figure 2, lors de l'hydrogénation catalytique (G = H₂, catalyseur = Pd supporté) d'une solution de travail (WS) utilisée pour la production de peroxyde d'hydrogène par le procédé cyclique à l'anthraquinone. Ladite production était mise en oeuvre au stade pilote avec un réacteur de 170 l.

Ledit réacteur était équipé d'un agitateur à trois étages, comprenant du bas vers le haut :
- une turbine Rushton à 6 pales fixes ;
- une turbine à 6 pales d'inclinaison variable entre 30 et 60° ;
- une hélice "Sabre".

Les débits étaient régulés comme suit :
Q_{WS} = 0,8 m³/h
Q'_{WS'} = 3,5 m³/h
q_{WS"} = 2,8m³/h, correspondant à une chasse sous pression d'un volume de liquide de 8 l, en 10s, toutes les 30min.

C'est dans les conditions précisées ci-dessus que les bons résultats énoncés en amont ont été obtenus :
- degré d'hydrogénation élevé de 10 à 15g/l ;
- lavage chimique et changement annuels des filtres primaires ;
- augmentation de la durée de vie des filtres secondaires.

## Revendications

1. Procédé de réaction chimique entre un gaz (G) et au moins un composé en solution, mis en oeuvre en continu, dans un réacteur (1) agité, en présence d'un catalyseur solide maintenu, dispersé, en suspension au sein de la solution (WS) renfermant ledit composé ; ledit procédé comprenant :
- l'alimentation dudit réacteur (1), en sa partie basse, en ladite solution à faire réagir (WS) et en ledit gaz (G) ;
- la mise en contact, au sein dudit réacteur (1), de ladite solution (WS), dudit gaz (G) et dudit catalyseur, aux fins de la mise en oeuvre de ladite réaction chimique ;
- la récupération, en partie haute dudit réacteur (1), de la solution ayant réagi (WS') ;
- la filtration de celle-ci (WS') par passage au travers successivement d'au moins un filtre primaire (F1) et d'au moins un filtre secondaire (F2+F3) ;
- la récupération de la solution ayant réagi, ainsi débarrassée dudit catalyseur (WS") ;
- le contre-lavage séquentiel dudit(desdits) filtre(s) primaire(s) (F1) avec un débit (q) pulsé prélevé sur ladite solution ayant réagi filtrée (WS") et/ou sur la solution d'alimentation à faire réagir (WS) ; ledit contre-lavage visant à renvoyer le catalyseur retenu sur le(s)dit(s) filtre(s) primaire(s) (F1) dans ledit réacteur (1) ; et
étant **caractérisé en ce qu'**il comprend en outre un recyclage d'une fraction de la solution ayant réagi (WS') vers la partie basse dudit réacteur (1), à un débit (Q') supérieur à celui (Q) d'alimentation dudit réacteur (1) en la solution à faire réagir (WS) ; ledit recyclage étant assuré par la mise en oeuvre, au sein dudit réacteur (1), d'une agitation adéquate et ladite fraction de la solution ayant réagi (WS') étant détournée, pour ledit recyclage, au niveau du(des)dit(s) filtre(s) primaire(s) (F1) et assurant ainsi un léchage tangentiel du(des)dit(s) filtre(s) primaire(s) (F1).

2. Procédé selon la revendication 1, **caractérisé en ce que** ledit débit (Q') de recyclage de la solution ayant réagi (WS') est de 3 à 10 fois supérieur, avantageusement de 5 à 10 fois supérieur, audit débit (Q) d'alimentation dudit réacteur (1) en la solution à faire réagir (WS).

3. Procédé selon l'une des revendications 1 ou 2, **caractérisé en ce que** ladite agitation adéquate, au sein dudit réacteur (1), assure, à la fois :
- la dispersion du gaz (G) et du catalyseur au sein de la solution (WS) ;
- l'effet de pompage escompté ;
- une recirculation interne de ladite solution (WS).

4. Procédé selon l'une quelconque des revendications 1 à 3, **caractérisé en ce que** ledit gaz (G) est de l'hydrogène (H₂).

5. Procédé selon l'une quelconque des revendications 1 à 4, **caractérisé en ce qu'**il est mis en oeuvre pour l'hydrogénation d'au moins un dérivé de l'anthraquinone dans le cadre de la préparation de peroxyde d'hydrogène (H₂O₂).

6. Dispositif convenant à la mise en oeuvre du procédé selon l'une quelconque des revendications 1 à 5, comprenant :
- un réacteur (1) équipé de moyens d'agitation (2), de moyens d'alimentation en solution (WS), de moyens d'alimentation en gaz (G) et de moyens pour délivrer la solution ayant réagi (WS') ; lesdits moyens d'alimentation en solution (WS) et en gaz (G) étant agencés en partie basse dudit réacteur (1) tandis que lesdits moyens pour délivrer la solution ayant réagi (WS') le sont en partie haute ;
- un ensemble de filtration (F1+F2+F3) monté, en sortie dudit réacteur (1), sur lesdits moyens pour délivrer la solution ayant réagi (WS') et comportant au moins un filtre primaire (F1) et au moins un filtre secondaire (F2+F3) ;
- des moyens pour mettre en oeuvre un contre-lavage séquentiel dudit(desdits) filtre(s) primaire(s) (F1) avec un débit (q) pulsé prélevé en aval dudit ensemble de filtration (F1+F2+F3) sur la solution ayant réagi filtrée (WS") et/ou en amont dudit réacteur (1) sur la solution à faire réagir (WS) ;
ledit dispositif étant **caractérisé en ce qu'**il comprend en outre des moyens pour recycler, avec léchage tangentiel du(des)dit(s) filtre(s) primaire(s) (F1), un débit de solution ayant réagi (WS') vers le bas dudit réacteur (1) et **en ce que** lesdits moyens d'agitation (2) dudit réacteur assurent, à eux seuls, ledit recyclage.

7. Dispositif selon la revendication 6, **caractérisé en ce que** lesdits moyens d'agitation (2) consistent en un agitateur à plusieurs étages.

8. Dispositif selon la revendication 7, **caractérisé en ce que** lesdits moyens d'agitation (2) comprennent :
- un mobile de dispersion (2'), actif en partie basse du réacteur (1) ;
- un étage intermédiaire (2"), apte à assurer une recirculation interne dans le réacteur (1) et à contribuer au pompage de la solution ayant réagi (WS') vers le(s)dit(s) filtre(s) primaire(s) (F1) ;
- un étage supérieur (2"'), apte à assurer le pompage de ladite solution ayant réagi (WS') vers le(s)dit(s) filtre(s) primaire(s) (F1).

9. Dispositif selon la revendication 8, **caractérisé en ce que** lesdits étages intermédiaire (2") et supérieur (2"') comportent des pales inclinées respectivement vers le bas et vers le haut.

10. Dispositif selon l'une quelconque des revendications 6 à 9, **caractérisé en ce qu'**il est agencé dans une boucle de production de peroxyde d'hydrogène (H₂O₂).

## Patentansprüche

1. Verfahren für eine chemische Reaktion zwischen einem Gas (G) und mindestens einer gelösten Verbindung, das im Durchlauf in einem gerührten Reaktor (1) in Gegenwart mindestens eines Feststoffkatalysators durchgeführt wird, der dispergiert in Suspension in der Lösung (WS), die die Verbindung enthält, gehalten wird, wobei das Verfahren umfasst:
- die Beschickung des Reaktors (1) in seinem unteren Abschnitt mit der Lösung (WS), die mit dem Gas (G) umgesetzt werden soll;
- das In-Kontakt-bringen im Inneren des Reaktors (1) der Lösung (WS), des Gases (G) und des Katalysators, um die chemische Reaktion durchzuführen;
- die Gewinnung aus dem oberen Abschnitt des Reaktors (1) der Lösung (WS), die umgesetzt worden ist;
- die Filtration dieser Lösung (WS') mittels aufeinanderfolgendem Hindurchleiten durch mindestens einen primären Filter (F1) und mindestens einen sekundären Filter (F2+F3);
- die Gewinnung der umgesetzten Lösung (WS''), die derart vom Katalysator befreit wurde;
- das aufeinanderfolgende Rückwaschen des (der) primären Filter(s) (F1) mit einem stoßweisen Durchsatz (q), der von der filtrierten, umgesetzten Lösung (WS'') und/oder der Beschickungslösung, die umgesetzt werden soll, (WS) abgezogen wird, wobei das Rückwaschen auf die Wiederverwendung des in dem (den) primären Filter(n) (F1) zurückgehaltenen Katalysators abzielt; und
**dadurch gekennzeichnet ist, dass** es ferner eine Rezyklierung eines Teils der umgesetzten Lösung (WS') in den unteren Abschnitt des Reaktors (1) mit einem Durchsatz (Q'), der höher ist als derjenige des Durchsatzes (Q) bei der Beschickung des Reaktors (1) mit der Lösung, die umgesetzt werden soll, (WS), umfasst, wobei diese Rezyklierung dadurch gewährleistet wird, dass im Inneren des Reaktors (1) angemessenes Rühren durchgeführt wird, und der Teil der umgesetzten Lösung (WS') für die Rezyklierung in Höhe des (der) primären Filter(s) (F1) abgeleitet wird und so ein tangentiales Leck des (der) primären Filter(s) (F1) gewährleistet wird.

2. Verfahren nach Anspruch 1, **dadurch gekennzeichnet, dass** der Durchsatz (Q') der Rezyklierung der umgesetzten Lösung (WS') 3 bis 10 Mal höher, vorteilhafterweise 5 bis 10 Mal höher, ist als der Durchsatz (Q) bei der Beschickung des Reaktors (1) mit der Lösung (WS), die umgesetzt werden soll.

3. Verfahren nach einem der Ansprüche 1 oder 2, **dadurch gekennzeichnet, dass** das angemessene Rühren im Inneren des Reaktors (1) gleichzeitig gewährleistet:
- die Dispersion des Gases (G) und des Katalysators in der Lösung (WS),
- die abgeleitete Pumpwirkung,
- eine interne Rezirkulation der Lösung (WS).

4. Verfahren nach einem der Ansprüche 1 bis 3, **dadurch gekennzeichnet, dass** das Gas (G) Wasserstoff (H₂) ist.

5. Verfahren nach einem der Ansprüche 1 bis 4, **dadurch gekennzeichnet, dass** es zur Hydrierung zumindest eines Anthrachinon-Derivats im Rahmen der Herstellung von Wasserstoffperoxid (H₂O₂) durchgeführt wird.

6. Vorrichtung, die zur Durchführung des Verfahrens nach einem der Ansprüche 1 bis 5 geeignet ist, umfassend:
- einen Reaktor (1), der mit Rührvorrichtungen (2), Vorrichtungen für die Beschickung mit Lösung (WS), Vorrichtungen für die Beschickung mit Gas (G) und Vorrichtungen zum Abführen der umgesetzten Lösung (WS') ausgestattet ist, wobei die Vorrichtungen für die Beschickung mit Lösung (WS) und mit Gas (G) im unteren Abschnitt des Reaktors (1) angeordnet sind, während die Vorrichtungen zum Abführen der umgesetzten Lösung (WS') sich im oberen Abschnitt befinden,
- eine am Ausgang des Reaktors (1) montierte Filtrationsgruppe (F1+F2+F3) an den Vorrichtungen zum Abführen der umgesetzten Lösung (WS'), die mindestens einen primären Filter (F1) und mindestens einen sekundären Filter (F2+F3) umfasst,
- Vorrichtungen zur Durchführung einer aufeinanderfolgenden Rückwäsche diese(s/r) primären Filter(s) (F1) mit einem stoßweisen Durchsatz (q), der stromabwärts der Filtergruppe (F1+F2+F3) von der filtrierten, umgesetzten Lösung (WS'') und/oder stromaufwärts des Reaktors (1) von der Beschickungslösung, die umgesetzt werden soll, (WS) abgezogen wird,
wobei die Vorrichtung **dadurch gekennzeichnet ist, dass** sie ferner Vorrichtungen zur Rezyklierung durch ein tangentiales Leck des (der) primären Filter(s) (F1) eines Durchsatzes der umgesetzten Lösung (WS') in den unteren Abschnitt des Reaktors (1) umfasst, und dadurch, dass die Rührvorrichtungen (2) des Reaktors alleine diese Rezyklierung gewährleisten.

7. Vorrichtung nach Anspruch 6, **dadurch gekennzeichnet, dass** die Rührvorrichtungen (2) aus einem Mehrstufenrührer bestehen.

8. Vorrichtung nach Anspruch 7, **dadurch gekennzeichnet, dass** die Rührvorrichtungen (2) umfassen:
- einen Dispergierkreisel, der im unteren Abschnitt des Reaktors (1) wirkt,
- ein Zwischenstufe (2"), die eine interne Rezirkulation im Reaktor (1) gewährleisten und zum Pumpen der umgesetzten Lösung (WS') zu dem (den) primären Filter(n) (F1) beitragen kann,
- eine obere Stufe (2'''), die das Pumpen der umgesetzten Lösung (WS') zu dem (den) primären Filter(n) (F1) gewährleisten kann.

9. Vorrichtung nach Anspruch 8, **dadurch gekennzeichnet, dass** die Zwischenstufe (2") und die obere Stufe (2''') jeweils gegen unten bzw. oben geneigte Blätter besitzen.

10. Vorrichtung nach einem der Ansprüche 6 bis 9, **dadurch gekennzeichnet, dass** sie in einer Schleife der Herstellung von Wasserstoffperoxid (H₂O₂) angeordnet ist.

## Claims

1. A method of generating a chemical reaction between a gas (G) and at least one compound in solution, which is carried out continuously, in an agitated reactor (1) in the presence of a solid catalyst which is maintained, in dispersed form, in suspension within the solution (WS) containing said compound; said method including:
- supplying said reactor (1), at the lower part thereof, with said solution to be made to react (WS) and said gas (G);
- bringing into contact, within said reactor (1), said solution (WS), said gas (G) and said catalyst, in order to carry out said chemical reaction;
- recovering, at the upper part of said reactor (1), the solution having reacted (WS');
- filtering it (WS') by successively passing it through at least one primary filter (F1) and at least one secondary filter (F2+F3);
- recovering the solution having reacted, thus purged of said catalyst (WS");
- sequentially back-washing said primary filter(s) (F1) with a pulsed flow (q) extracted from said filtered solution having reacted (WS") and/or from the supply solution to be made to react (WS); said back-washing being aimed at directing the catalyst retained on said primary filter(s) (F1) into said reactor (1); and
**characterised in that** it further includes recycling a fraction of the solution having reacted (WS') towards the lower part of said reactor (1) at a flow rate (Q') which is greater than the supply flow rate (Q) to said reactor (1) of the solution to be made to react (WS); said recycling being ensured through adequate agitation being carried out within said reactor (1) and said fraction of the solution having reacted (WS') being diverted, for said recycling, to said primary filter(s) (F1) and thus ensuring tangential washing against said primary filter(s) (F1).

2. The method according to Claim 1, **characterised in that** said recycling flow rate (Q') of the solution having reacted (WS') is 3 to 10 times greater, advantageously 5 to 10 times greater, than said supply flow rate (Q) of the solution to be made to react (WS) to said reactor (1).

3. The method according to one of Claims 1 or 2, **characterised in that** said adequate agitation within said reactor (1) ensures, at the same time:
- the dispersal of the gas (G) and the catalyst within the solution (WS);
- the desired pump effect;
- internal recirculation of said solution (WS).

4. The method according to any one of Claims 1 to 3, **characterised in that** said gas (G) is hydrogen (H₂).

5. The method according to any one of Claims 1 to 4, **characterised in that** it is carried out in order to hydrogenate at least one derivative of anthraquinone in the context of hydrogen peroxide (H₂O₂) preparation.

6. A device suitable for carrying out the method according to any one of Claims 1 to 5, including:
- a reactor (1) equipped with agitating means (2), means for supplying a solution (WS), means for supplying a gas (G) and means for delivering the solution having reacted (WS'); said means for supplying a solution (WS) and a gas (G) being arranged at the lower part of said reactor (1) while said means for delivering the solution having reacted (WS') are arranged at the upper part;
- a filtering assembly (F1+F2+F3) mounted at the exit of said reactor (1) on said means for delivering the solution having reacted (WS') and comprising at least one primary filter (F1) and at least one secondary filter (F2+F3);
- means for carrying out a sequential back washing of said primary filter(s) (F1) with a pulsed flow (q) extracted downstream of said filtering assembly (F1+F2+F3) from the filtered solution having reacted (WS") and/or upstream of said reactor (1) from the solution to be made to react (WS);
said device being **characterised in that** it includes, in addition to the recycling means, with tangential washing against said primary filter(s) (F1), a flow of solution having reacted (WS') towards the bottom of said reactor (1), and **in that** said agitating means (2) of said reactor alone ensure the carrying out of said recycling.

7. The device according to Claim 6, **characterised in that** said agitating means (2) consist of an agitator having several stages.

8. The device according to Claim 7, **characterised in that** said agitating means (2) include:
- a dispersing liquid (2') which is active in the lower part of the reactor (1);
- un intermediate stage (2"), suitable for ensuring an internal recirculation in the reactor (1) and for aiding the pumping of the solution having reacted (WS') towards said primary filter(s) (F1);
- un upper stage (2'''), suitable for ensuring the pumping of said solution having reacted (WS') towards said primary filter(s) (F1).

9. The device according to Claim 8, **characterised in that** said intermediate (2") and upper (2"') levels comprise blades which are inclined respectively downwards and upwards.

10. The device according to any one of Claims 6 to 9, **characterised in that** it is arranged in a production loop for hydrogen peroxide (H₂O₂).
